Europäisches Patentamt

European Patent Office

Office européen des brevets

(19)

(11) Veröffentlichungsnummer: **0 195 972**
**B1**

(12) **EUROPÄISCHE PATENTSCHRIFT**

(45) Veröffentlichungstag der Patentschrift:
**23.05.90**

(21) Anmeldenummer: **86103088.0**

(22) Anmeldetag: **07.03.86**

(51) Int. Cl.⁵: **B60R 11/02**, G08B 13/14

(54) **System zur Sicherung von elektronischen Geräten, insbesondere Autoradios gegen Diebstahl.**

(30) Priorität: **16.03.85 DE 3509562**

(43) Veröffentlichungstag der Anmeldung:
**01.10.86 Patentblatt 86/40**

(45) Bekanntmachung des Hinweises auf die Patenterteilung:
**23.05.90 Patentblatt 90/21**

(84) Benannte Vertragsstaaten:
**AT DE FR IT**

(56) Entgegenhaltungen:
**EP-A- 0 127 258**
**EP-A- 0 141 468**
**DE-A- 3 440 379**
**FR-A- 2 519 832**
**US-A- 4 494 114**

(73) Patentinhaber: **Blaupunkt-Werke GmbH,
Robert-Bosch-Strasse 200, D-3200 Hildesheim(DE)**

(72) Erfinder: **Seibold, Peter, Dipl.-Ing., Lehmkamp 33 D,
D-3201 Diekhoizen(DE)**
Erfinder: **Strauss, Karl-Peter, Dipl.-Ing., Am
Lachnerring 26, D-3200 Hildesheim(DE)**

(74) Vertreter: **Eilers, Norbert, Dipl.-Phys., Blaupunkt-Werke
GmbH Robert-Bosch-Strasse 200,
D-3200 Hildesheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein System nach der Gattung des Hauptanspruchs.

Autoradios sind wegen ihres verhältnismäßig hohen Wertes und ihrer Transportfähigkeit häufig Gegenstand von Diebstählen, insbesondere aus geparkten Kraftfahrzeugen. Zur Verhinderung dieser Diebstähle ist eine Reihe von Einrichtungen bekannt geworden, wie beispielsweise mechanische Verriegelungen oder Alarmeinrichtungen, deren Wirksamkeit jedoch erfahrungsgemäß begrenzt ist.

Aus der US-A 4 494 114 ist ein dem Oberbegriff des Patentanspruchs 1 zugrundeliegendes System zur Sicherung von elektronischen Geräten bekannt, bei dem ein Speicher für ein Codewort, Mittel zur Eingabe des Codewortes, Mittel zur elektrischen Erfassung der Entnahme des Gerätes aus seinem Einbauort und Mittel zur Verhinderung der Funktion des Gerätes, solange nach einer Entnahme das Codewort nicht eingegeben wurde, vorgesehen sind. Mit derartigen Systemen erfolgt eine Blockierung der Gerätefunktionen nicht nur bei einer Entnahme des Gerätes aus seinem Einbauort, sondern auch nach einer vorübergehenden Unterbrechung der Betriebsspannung.

Das erfindungsgemäße System mit den kennzeichnenden Merkmalen des Hauptanspruchs hat demgegenüber den Vorteil, daß nicht nach jeder Unterbrechung der Betriebsspannung, auch wenn das Gerät (z.B. Autoradio) nicht ausgebaut wurde, d.h. die Batterie in einer Kfz-Werkstatt nur vorübergehend abgeklemmt war, wieder das richtige Codewort eingegeben werden muß. Durch eine Weiterbildung der Erfindung ist es zudem möglich, das Codewort unter Vorlage eines Berechtigungsnachweises beim Hersteller des Gerätes zu erfragen, selbst dann, wenn das Codewort vom Benutzer eingegeben wurde.

Die Erfindung ist nicht nur auf die Verwendung bei Autoradios beschränkt, selbstverständlich können auch andere elektronische Geräte geschützt werden, sei es, daß sie ebenfalls in Kraftfahrzeugen eingebaut sind oder an anderer Stelle betrieben werden.

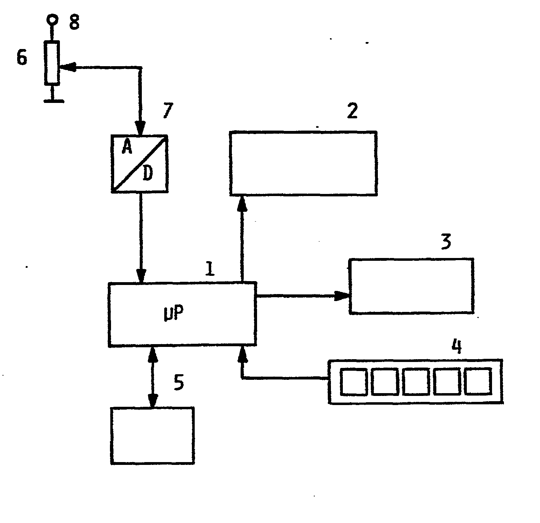

Ein Ausführungsbeispiel der Erfindung ist in der Zeichnung dargestellt und in der nachfolgenden Beschreibung näher erläutert.

In einem Autoradio ist ein Mikroprozessor 1 angeordnet, mit dessen Hilfe das erfindungsgemäße System aber auch andere Funktionen, wie beispielsweise die digitale Abstimmung gesteuert werden. Die zwar mit dem Mikroprozessor 1 verbundenen, jedoch für das Verständnis der Erfindung nicht notwendigen Teile eines Autoradios sind deshalb mit einem Block 2 zusammenfassend dargestellt.

An den Mikroprozessor 1 sind ferner angeschlossen: Eine alphanumerische Anzeigevorrichtung (Display) 3, Bedienelemente des Autoradios, von denen hier lediglich Stationstasten 4 dargestellt sind, und ein nichtflüchtiger, elektrisch löschbarer Speicher (EAROM) 5. Ferner ist über einen Analog-Digital-Wandler 7 ein Potentiometer 6 angeschlossen. Der Schleifer des Potentiometers 6 ist mit einer elastischen Rückstellvorrichtung versehen und derart angeordnet, daß bei einem Ausbau des Autoradios sich die Potentiometerstellung verändert, wonach es praktisch unmöglich ist, die ursprüngliche Stellung wieder zu erhalten.

Beim erstmaligen Einbau des Autoradios wird nun die Stellung des Potentiometers 6 als digitaler Wert in den Speicher 5 eingeschrieben. Dazu wird vom Schleifer des Potentiometers 6 ein der Stellung des Potentiometers 6 entsprechender Teil der bei 8 zugeführten Spannung entnommen und einem A/D-Wandler 7 zugeführt, dessen digitales Ausgangssignal vom Mikroprozessor 1 abgefragt und in den Speicher 5 eingeschrieben wird.

Bei der weiteren Beschreibung des Systems werden zwei verschiedene Arten des Betriebes des erfindungsgemäßen Systems erläutert:

1. Das Codewort wird bereits vom Hersteller in den Speicher 5 eingeschrieben und dem Käufer, beispielsweise in einem verschlossenen Umschlag, ausgehändigt. Dabei ist eine Festlegung des Codewortes durch den Kunden nicht vorgesehen. Falls er das Codewort vergißt bzw. das Dokument mit dem Codewort verlegt, kann er es unter Vorlage des Kaufbeleges das Codewort vom Hersteller erfragen.

2. Zur ersten Inbetriebnahme ist vom Hersteller im Speicher 5 ein für alle ausgelieferten Autoradios gültiges Codewort eingeschrieben worden. Der Kunde kann jedoch ein eigenes Codewort eingeben. Hilfsmittel für den Fall, daß der Kunde dieses Codewort vergißt, sind weiter unten beschrieben.

Bei der erstgenannten Betriebsart wird zur ersten Inbetriebnahme mit Hilfe der Tasten 4 und der Anzeigevorrichtung 3 das Codewort eingegeben. Stimmt es mit dem im Speicher 5 abgelegten Codewort überein, kann das Autoradio in Betrieb genommen werden.

Gleichzeitig wird der Wert für die Stellung des Potentiometers 6 zusätzlich zu dem Codewort in den Speicher eingelesen.

Bei erneuter Inbetriebnahme wird vom Mikroprozessor die Stellung des Potentiometers 6 mit dem im Speicher abgelegten Wert verglichen. Bei Übereinstimmung wird der Betrieb des Autoradios aufgenommen. Bei Nichtübereinstimmung wird der Benutzer über die Anzeigevorrichtung 3 zur Eingabe des Codewortes aufgefordert. Dadurch wird erreicht, daß die normale Bedienung des Autoradios nicht erschwert wird und daß im Falle eines berechtigten Aus- und Wiedereinbaus die Wiederaufnahme des Betriebes durch die Eingabe des Codewortes möglich ist.

Ist ein falsches Codewort eingegeben worden, so wird die Eingabe für mehrere Sekunden gesperrt, wonach ein erneuter Versuch zur Eingabe des Codewortes unternommen werden kann. Diese Sperrzeit kann für jeden darauf folgenden Versuch vergrößert werden, wodurch ein Ermitteln des Codewortes durch Ausprobieren verhindert wird.

Eine Weiterbildung der Erfindung sieht vor, daß durch Betätigung einer oder mehrerer Tasten gleichzeitig das Gerät gesperrt wird, so daß bei folgender Inbetriebnahme eine Codeeingabe erforderlich wird. Dieses kann beispielsweise dadurch geschehen, daß bei ordnungsgemäßen Betrieb zwei der Tasten 4 betätigt werden, worauf vom Mikroprozessor 1 der im Speicher 5 abgelegte Wert für die Potentiometerstellung gelöscht wird. Beim folgenden Einschalten erkennt dann der Mikroprozessor 1 eine Nichtübereinstimmung der tatsächlichen Potentiometerstellung mit der gespeicherten und fordert die Eingabe des Codewortes an.

Wie bereits oben erwähnt, kann das erfindungsgemäße System auch derart ausgebildet sein, daß es eine Festlegung des Codewortes durch den Benutzer des Gerätes erlaubt. Hierzu wird das Gerät vom Hersteller mit einem Codewort versehen, welches für alle Geräte gleich lautet und daher in den allgemeinen Kundenunterlagen genannt ist. Will der Benutzer dieses Codewort durch ein eigenes oder ein bereits früher eingegebenes eigenes Codewort durch ein neues ersetzen, so kann er nach erfolgreicher Eingabe des bisherigen Codewortes ein neues Codewort eingeben, welches im Speicher 5 abgelegt wird.

Für den Fall, daß der Benutzer das von ihm gewählte Codewort vergessen hat, ist im Speicher 5 eine Verschlüsselungstabelle abgelegt, mit deren Hilfe bei der Eingabe eines falschen Codewortes auf der Anzeigevorrichtung ein Schlüsselwort erscheint. Die Zuordnung des Schlüsselwortes zum richtigen Codewort ist nur dem Hersteller bekannt, so daß der Benutzer unter Vorlage des Kaufbelegs und Angabe der Schlüsselnummer das von ihm gewählte Codewort erfragen kann.

Da beim normalen Betrieb des mit einem erfindungsgemäßen System versehenen Autoradios eine Codeworteingabe selten oder nie erforderlich ist, wird es kaum wirtschaftlich sein, für das erfindungsgemäße System separate Bedien- bzw. Anzeigeelemente vorzusehen. Gemäß einer Weiterbildung wird daher die in vielen Autoradios ohnehin vorhandene alphanumerische Anzeige für die empfangene Frequenz als Anzeigevorrichtung 3 dienen. Diese sowie beispielsweise die Stationstasten werden vom Mikroprozessor zur Eingabe des Codewortes umgeschaltet, wenn gemäß dem oben beschriebenen die Eingabe eines Codewortes erforderlich ist.

Da sich die Sicherheit gegen ein Herausfinden des Codes durch Probieren einerseits mit der Anzahl der Stellen und andererseits mit der Wahl von alphanumerischen Zeichen anstelle von numerischen Zeichen erhöht, werden gemäß einer Weiterbildung der Erfindung fünf alphanumerische Zeichen als Codewort verwendet.

Die Eingabe eines solchen Codewortes mit der Anzeigevorrichtung 3 und beispielsweise nur mit den Stationstasten 4 kann dadurch erfolgen, daß nach Betätigen der ersten Stationstaste die erste Stelle des Displays nacheinander die Ziffern 0 bis 9 und die Buchstaben A bis Z, also insgesamt 36 Zeichen, zeigt. Bei Erscheinen des gewünschten Zeichens ist die Taste loszulassen, so daß der Buchstabe der gerade angezeigt wird, in den Mikroprozessor 1 und damit in den Speicher 5 eingegeben wird. Mit den weiteren Zeichen wird in ähnlicher Weise verfahren.

## Patentansprüche

1. System zur Sicherung von elektronischen Geräten, insbesondere von Autoradios, gegen Diebstahl, welche einen Speicher für ein Codewort, Mittel zur Eingabe des Codewortes, Mittel zur elektrischen Erfassung der Entnahme des Gerätes aus seinem Einbauort und Mittel zur Verhinderung der Funktion des Gerätes solange nach einer Entnahme das Codewort nicht eingegeben wurde aufweisen, dadurch gekennzeichnet, daß die Mittel zur Erfassung der Entnahme des Gerätes ein Potentiometer umfassen, welches derart in dem Gerät angeordnet ist, daß es sowohl nach einer Entnahme als auch nach einem Wiedereinbau in einen anderen Einbauort nicht die ursprüngliche Stellung aufweist, daß Mittel vorgesehen sind zur Überprüfung der Potentiometerstellung nach dem Einschalten des Gerätes und daß eine Funktion des Gerätes bei einer veränderten Potentiometerstellung bis zur Eingabe des richtigen Codewortes unterbunden ist.

2. System nach Anspruch 1, gekennzeichnet durch folgendes Verfahren zur Eingabe eines aus mehreren alphanumerischen Zeichen bestehenden Codewortes:
Nach Betätigen einer Taste werden in einem ersten Feld der Anzeigevorrichtung nacheinander alle verfügbaren alphanumerischen Zeichen dargestellt, bei einer weiteren Betätigung einer Taste, gegebenenfalls dem Loslassen der zuerst betätigten Taste, wird dasjenige alphanumerische Zeichen, welches gerade angezeigt wird, als erstes Zeichen des Codewortes eingegeben, die nachfolgende Eingabe der weiteren Zeichen erfolgt entsprechend.

3. System nach Anspruch 1, dadurch gekennzeichnet, daß nach der Eingabe eines falschen Codewortes von der alphanumerischen Anzeigevorrichtung das Codewort in verschlüsselter Form angezeigt wird.

4. System nach Anspruch 1, dadurch gekennzeichnet, daß nach weiteren Eingaben von falschen Codewörtern die Sperrzeit verlängert wird.

## Claims

1. System for securing electronic equipment, in particular car radios, against theft, which equipment has a memory for a code word, means for entering the code word, means for electrically detecting the removal of the equipment from the place of installation and means for preventing the function of the equipment for as long as the code word has not been entered after a removal, characterized in that the means for detecting the removal of the equipment comprise a potentiometer, which is arranged in the equipment in such a way that, both after a removal and after a re-installation in another place of installation, it does not have the original setting, that means are provided for testing the potentiometer setting after switching on the equipment and that functioning of the equipment with a changed potentiometer setting is prevented until entry of the correct code word.

2. System according to Claim 1, characterized by the following method for entering a code word consisting of several alphanumeric characters:

After activation of a key, all available alphanumeric characters are successively displayed in a first field of the display device, on a further activation of a key, possibly the release of the key activated first, that alphanumeric character which has just been indicated is entered as the first character of the code word; the subsequent entry of the further characters occurs correspondingly.

3. System according to Claim 1, characterized in that, after the entry of a false code word by the alphanumeric display device, the code word is indicated in encoded form.

4. System according to Claim 1, characterized in that, after further entries of incorrect code words, the blocking time is extended.

**Revendications**

1. Système de protection d'appareils électroniques notamment d'autoradios, contre le vol, système comportant une mémoire pour un mot de code, des moyens pour introduire le mot de code, des moyens pour détecter électriquement l'extraction de l'appareil de son emplacement de montage et des moyens pour éviter le fonctionnement de l'appareil aussi longtemps qu'après une extraction, le mot de code n'a pas été introduit de nouveau, système caractérisé en ce que les moyens pour détecter l'extraction de l'appareil comprennent un potentiomètre qui est associé à l'appareil de façon qu'à la fois après l'extraction et après le remontage dans un autre emplacement, il ne présente plus la position initiale, des moyens étant prévus pour contrôler la position du potentiomètre après la mise en route de l'appareil et le fonctionnement de l'appareil est interdit pour une position de potentiomètre, modifiée, jusqu'à l'introduction du mot de code correct.

2. Système selon la revendication 1, caractérisé par la procédure suivante pour introduire un mot de code formé de plusieurs signes alphanumériques:

après actionnement d'une touche, un premier champ du dispositif d'affichage affiche successivement tous les signes alphanumériques disponibles, et en ce que lors de l'actionnement ultérieur d'une touche, le cas échéant après libération de la touche actionnée en premier lieu, le signe alphanumérique correspondant, qui vient d'être affiché, est introduit comme premier signe du mot de code et l'introduction suivante des autres signes se fait de manière correspondante.

3. Système selon la revendication 1, caractérisé en ce qu'après l'introduction d'un mot de code erroné, le dispositif d'affichage alphanumérique affiche le mot de code sous forme codée.

4. Système selon la revendication 1, caractérisé en ce que le temps de blocage augmente au fur et à mesure de l'introduction de mots de code erronés.